(19) Europäisches Patentamt

European Patent Office

Office européen des brevets

(11) EP 1 515 548 B1

(12) **EUROPEAN PATENT SPECIFICATION**

(45) Date of publication and mention
of the grant of the patent:
**17.08.2016 Bulletin 2016/33**

(51) Int Cl.:
*H04N 5/225* (2006.01)          *H04N 5/232* (2006.01)
*H04N 5/262* (2006.01)          *H04N 7/18* (2006.01)

(21) Application number: **04010140.4**

(22) Date of filing: **29.04.2004**

(54) **Imaging system and method for displaying and /or recording undistorted wide-angle image data**

Bilderfassungssystem und -verfahren zur Anzeige und/oder Aufnahme von unverzerrten Weitwinkelbilddaten

Système et méthode de prise de vues pour affichage et/ou enregistrement des données d'images à grand angle sans distorsion

(84) Designated Contracting States:
**AT BE BG CH CY CZ DE DK EE ES FI FR GB GR
HU IE IT LI LU MC NL PL PT RO SE SI SK TR**

(30) Priority: **12.09.2003 US 502700 P**

(43) Date of publication of application:
**16.03.2005 Bulletin 2005/11**

(73) Proprietor: **Sensormatic Electronics, LLC
Boca Raton, FL 33487 (US)**

(72) Inventors:
• **Berkey, Thomas
Tavernier, FL 33070 (US)**
• **Fuoco, Daniel, P.
Boca Raton, FL 33433 (US)**
• **MILLS, Lawrence R.
Coral Springs, FL 33076 (US)**

(74) Representative: **Hafner, Dieter et al
Hafner & Partner
Patent-/Rechtsanwaltskanzlei
Schleiermacherstrasse 25
90491 Nürnberg (DE)**

(56) References cited:
**EP-A- 1 028 389        US-A- 5 200 818
US-A- 5 903 319        US-A1- 2002 102 101**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

*Field of the Invention*

This invention generally relates to imaging systems, and more particularly, to a system and method for generating undistorted image data, such as video signals suitable for display and/or recording by conventional equipment, from wide-angle lens image data.

*Background Description*

Conventional video surveillance systems allow users to view portions of monitored areas by either physically aiming a video camera at a desired portion or by generating a perspective corrected view of the desired portion from a wide-angle (e.g., fisheye) image of the monitored area. Signals from the video camera are typically decoded into digital video data. The data is then buffered for processing. In the case of wide-angle image data, processing may entail performing complex mathematical transformations to remove wide-angle distortion. As the data is transformed, it is typically sent to an output buffer before it is encoded for output to a display or recorder. Such conventional systems have several shortcomings.

One drawback of such conventional systems is that they tend to rely upon complex microprocessors, such as Reduced Instruction Set Computer (RISC) chips or Complex Instruction Set Computer (CISC) microprocessors, that utilize task scheduling and other functionality to achieve rapid processing of complex instructions for real-time performance. These tend to be expensive and complicated chips because of the many different tasks they are capable of performing.

Another drawback of conventional systems is that they tend to rely on a processor for performing all computations. Transformation algorithms typically require performance of many floating point, trigonometric and division operations, as well as other complex mathematical functions that consume appreciable processor resources and time.

Yet another drawback of conventional systems is that they typically require an output buffer. Such systems transform input image data from an input buffer into output image data in an output buffer. Transformed data stored in the output buffer is then scan converted by an encoder to produce output signals suitable for a display device or a recorder. Disadvantageously, the output buffer increases overall cost and signal latency.

US 5,903,319 discloses a method and apparatus for the elimination of temporal and spatial distortions from interlaced video signals, particularly those that occur in signals associated with affine transformations. Especially, a system is disclosed for correcting wide-angle image data, wherein the system comprises a first input buffer configured to store wide-angle image data, an image data processor operably coupled to said first buffer and configured to transform wide-angle image data stored in the first input buffer into corrected image data, an encoder operably coupled to said image data processor and configured to receive and encode the corrected image data in a format suitable for at least one of display and recording of corrected images and wherein corrected image data is not stored in a buffer from the time of transformation by the image data processor until the time said undistorted image data is received by the encoder.

EP 1 028 389 A2 discloses an arithmetic unit for image transformation, especially for transforming a fisheye image obtained by using a fisheye lens into a plane image for display. The unit comprises a first coordinate calculating unit for obtaining first projection coordinates derived by projecting coordinates on the plane image onto a fisheye image face as an imaginary object face; and a second coordinate calculating unit for obtaining second projection coordinates derived by projecting the first projection coordinates obtained by the first coordinate calculating unit onto the fisheye image face

US 2002/0102101 A1 discloses a camera system that comprises a stationary camera having a wide angle view, a remotely controllable camera having a relatively smaller angle view for providing images in substantially full resolution, and a processor.

While the invention overcomes one or more of the problems in conventional video surveillance systems as set forth above, it should be apparent that the invention may have applicability to a wide array of imaging systems and methods, regardless of the particular format of the image data.

**SUMMARY OF THE INVENTION**

The invention avoids the drawbacks and disadvantages of the prior art by providing a system for correcting wide-angle image data according to Claim 1.The system may generate a graphical user interface that provides a plurality of substantially undistorted views from the wide-angle image data, including, for example, a panoramic view that provides a substantially undistorted view based on the wide-angle image data, a virtual view corresponding to a portion of the panoramic view based upon wide-angle data or other image data, and a display reference window overlaid in a panoramic view to identify the portion of a panoramic view represented by the virtual view. As another option, the system may include a dome camera system configured to provide image data for a virtual view according to commands. The dome camera image data may exhibit higher resolution than the wide-angle data.

Additional features, advantages, and embodiments of the invention may be set forth or apparent from consideration of the following detailed description, drawings, and claims. Moreover, it is to be understood that both the foregoing summary of the invention and the following detailed description are exemplary and intended to provide further explanation.

## BRIEF DESCRIPTION OF THE DRAWINGS

The accompanying drawings, which are included to provide a further understanding of the invention, are incorporated in and constitute a part of this specification, illustrate preferred embodiments of the invention and together with the detail description serve to explain the principles of the invention. In the drawings:

Figure 1 is a block diagram that conceptually shows an exemplary imaging system for producing undistorted image data from buffered wide-angle image data without an output image buffer in accordance with the principles of the invention;

Figure 2 is an enlarged block diagram that conceptually illustrates the graphical user interface shown in Figure 1;

Figure 3 conceptually shows $\theta$ (i.e., the pan rotation angle around the Z-axis) and $\varphi$ (the tilt rotation angle around the X-axis) for a transformation in accordance with the principles of the invention;

Figure 4 conceptually shows image center ICxy based on image radii IRx and IRy in accordance with the principles of the invention;

Figure 5 is a high level flowchart conceptually illustrating steps of a methodology for creating a graphical user interface not in accordance with the principles of the invention; and

Figure 6 is a high level flowchart conceptually illustrating steps of a methodology for creating a graphical user interface including using dome camera system positioning not in accordance with the principles of the invention.

## DETAILED DESCRIPTION

*Imaging System*

An imaging system constructed in accordance with the principles of the invention includes components configured to transform digital image data corresponding to wide-angle images, such as video images, of a monitored area into data corresponding to one or more undistorted (or substantially undistorted) views of the monitored area that may be displayed on conventional closed circuit television ("CCTV") monitors without use of a post-transformation output image buffer. Wide-angle image data may be transformed as needed for encoding and output.

Various image sources may supply image data for use by a system in accordance with the invention. By way of example and not limitation, one or more imagers such as digital or analog video cameras may be used to supply video data, which may be in any known format. Thus, unless otherwise apparent from the context, as used herein "video" broadly refers to images, such as images of stationary and/or moving objects, which may or may not be produced using signals in known formats, such as NTSC signals. The system of the invention may operate in real time, processing video data as it is produced using the video imagers and without appreciably delaying output to a display monitor or recorder.

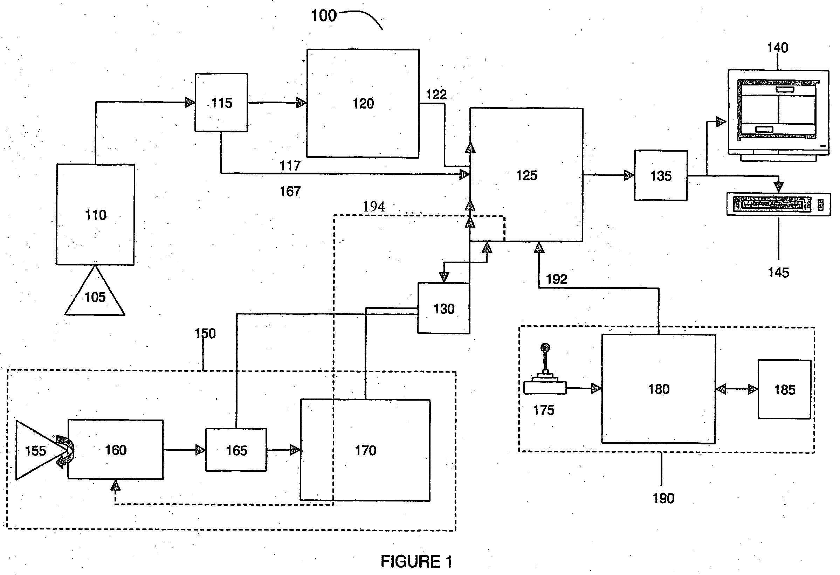

Referring now to **Figure 1,** a high-level block diagram of a video imaging system 100 for use with a system in accordance with an exemplary implementation of the invention is shown. The video imaging system **100** includes a video camera **110** equipped with a wide-angle lens **105,** such as a fisheye lens. Various wide-angle lenses are available, many of which, for example, have an angular field of view of approximately 75 degrees or more. The wide-angle lens **105** may preferably be suitable for producing an image of an entire area to be monitored (e.g., portions of a room excluding the ceiling) when the wide-angle lens is positioned at a determined point relative to the monitored area (e.g., on a ceiling of the room, at or near the center of the ceiling, pointing downwardly). By way of example and not limitation, a fisheye lens, which is a type of wide-angle lens **105,** and which may have a field of view of 180 degrees, may be utilized. The camera **110** may employ a charge coupled device (CCD) array, a Time Delay Integration (TDI) CCD array, complementary metal oxide semiconductor (CMOS) image sensors or other sensors or devices for electronic image production. Additionally, the camera **110** may be a digital or analog camera.

While wide-angle lenses **105** are useful for capturing a wide field of view, they tend to distort images by curving or warping objects. Such curving or warping, also known as barrel distortion, is referred to herein as "distortion", "wide-angle lens distortion" or the like. Typically, the wider the field of view for a lens, the more pronounced the distortion will be.

Unless otherwise apparent from the context, as used herein, "undistorted" means without any, or with substantially reduced, wide-angle image distortion. "Undistorted" data is produced by transforming wide-angle image data using mathematical algorithms, as discussed more fully below. An "undistorted image" is an image produced using "undistorted data."

The wide-angle lens **105** is aimed at the area to be monitored. The lens **105** may be a fisheye lens or another type of wide-angle lens that provides a 180 degree field of view, or a wider or narrower field of view. By way of example, the lens may be a fisheye lens positioned on a ceiling near the center of a monitored room, aimed downwardly. This position and orientation may generate a view of substantially the entire monitored room, excluding the ceiling.

A video decoder **115** operably coupled to the camera **110** translates analog signals from the camera **110** into digital video data. The decoder **115** includes a clock circuit (e.g., a 27 MHz video clock circuit) suitable for synchronization and processing of video image data streams. Clock signals **117** from the clock circuit are transmitted to processor **125.**

By way of example and not limitation, a suitable decoder **115** may include commercially available decoders, such as an SAA7113H 9-bit video input processor available from Phillips Electronics N.V. The SAA7113H 9-bit video input processor includes an anti-aliasing filter, an automatic clamp and gain control, a clock generation circuit, a digital multi-standard decoder, and a brightness, contrast and saturation control circuit. Decoder **115** may be able to decode Phase Alternation Line (PAL), French Sequential Couleur avec Memoire (SECAM) and American National Television Systems Committee (NTSC) standard signals into CCIR-601 (International Radio Consultative Committee, now the International Telecommunication Union Radiocommunication Sector, standard for encoding analog video signals in digital form) compatible color component data values. The SAA7113H 9-bit video input processor accepts as analog inputs CVBS (i.e., composite Chroma Video Blanking & Sync inputs) or S-video (Y/C).

Digital video data from decoder **115** is stored in an input image buffer **120.** The input image buffer **120** may be comprised of volatile or non-volatile memory or other devices configured to store video image data. The data may be stored temporarily, for example, until no longer needed for transformation by the image data processor **125,** as described below, until new video image data is required to be stored in the occupied portion of the buffer, or until some other event occurs or a determined period of time elapses. The buffer **120** may be sized to store image data corresponding to an entire field or frame of video, or more or less data.

One or more user input modules **190** may also be provided to generate user commands. By way of example, the module **190** may include an input device **175** such as a keypad, digitizer, joystick, microphone and voice recognition module, or some other device configured to enable a user to enter commands. The input device **175** may be operably coupled to an input processor **180** and input memory **185** configured to produce user command data **192** corresponding to user input commands. The input processor **180** may be implemented as a special purpose computer; a programmed general purpose computer; a programmed microprocessor, microcontroller or programmable read-only memory and peripheral integrated circuit elements; an application specific integrated circuit (ASIC) or other integrated circuits; a digital signal processor; a hardwired electronic or logic circuit such as a discrete element circuit; and/or a programmable logic device such as a field programmable gate array (FPGA), or the like. The input memory **185** may include volatile or non-volatile memory such as, for example, static random access memory (SRAM), dynamic random access memory (DRAM), fast page mode dynamic random access memory (FPM DRAM), extended data-out dynamic random access memory (EDO DRAM), synchronous dynamic random access memory (SDRAM), double data rate synchronous dynamic RAM (DDR SDRAM), electronically erasable programmable read only memory (EEPROM) such as flash memory with or without a controller, hard disk enabled virtual memory, and/or other data storage devices that may be operably coupled to the input processor **180.** Using a user input device **175,** a user may control pan, tilt, zoom factors, and other display parameters.

In an exemplary implementation, calculations that are required for transformation (as discussed more fully below), that are common to all or the vast majority of wide-angle image data to be transformed and vary only with wide-angle image parameters, pan, tilt, zoom or other user input commands, may be calculated using the input module **190.** Delegating such computations to the input module may help conserve image data processor **125** resources and facilitate real-time transformations.

An image data processor **125** may receive buffered image data **122,** clock signals **117** and user command data **192** to produce undistorted data. The processor **125** may be implemented as a special purpose computer; a programmed general purpose computer; a programmed microprocessor, microcontroller or programmable read-only memory and peripheral integrated circuit elements; an application specific integrated circuit (ASIC) or other integrated circuits; a digital signal processor; a hardwired electronic or logic circuit such as a discrete element circuit; and/or a programmable logic device such as a field programmable gate array (FPGA), or the like. A preferred implementation uses an FPGA or an ASIC as the processor **125.** When a system design is considered stable, an FPGA could be replaced with an ASIC to reduce system cost.

The image data processor **125** may also be operably coupled to memory **130,** which may, for example, be non-volatile memory comprised of electronically erasable programmable read only memory (EEPROM), such as flash memory; a solid-state floppy-disk card (SSFDC) such as SmartMedia® memory commercially available by Kabushiki Kaisha Toshiba, Toshiba Corporation, and Toshiba America Electronic Components, Inc.; CompactFlash® memory by SanDisk Corporation; hard disk enabled virtual memory; and/or other non-volatile storage devices. Illustratively, memory **130** may be used to facilitate processor computations by storing one or more tables of values for frequently calculated functions, especially functions that might otherwise consume significant processor **125** resources. By way of example and not limitation, memory **130** may store a table of values, such as cosine, sine, 1/cosine, 1/sine, or other values based on trigonometric or other types of functions used in an applicable transformation algorithm, as discussed more fully below. The indices for the table may be angular values in degrees, radians, other types of measurements, or some other possible value for a variable. The table entries may be pre-calculated values based on the corresponding indices. Trigonometric functions and complex floating point calculations can otherwise be a time and resource consuming part of processor **125** calculations. Advantageously, the use of pre-determined stored values conserves processor resources and may lead to an appreciable increase in overall transformation speed.

As discussed more fully below, the image data processor **125** mathematically transforms wide-angle image data in the input image buffer **120** into undistorted data using a transformation algorithm. According to the invention, the image data processor **125** is configured to complete transformation calculations, on a pixel-by-pixel basis, as the data for a pixel is needed for encoding to produce output video signals in real-time. Transformation calculations are started far enough in advance such that the final calculation step is completed just in time to provide undistorted image data to the encoder. By way of example, one NTSC video frame, displayed approximately every $1/30^{th}$ of a second, contains two interlaced fields. Each field is displayed approximately every 1/60th of a second each. Thus, a system made in accordance with the principles of the invention may generate all undistorted pixel image data for a frame approximately every $1/30^{th}$ of a second. The time may be monitored using the 27 MHz clock circuit signals 117. To further illustrate, an interlaced NTSC display of 720 by 486 pixels and a refresh rate of 60 Hz, must display all the pixels for a field (i.e., 174,960 pixels) approximately every $1/60^{th}$ of a second, or a pixel must be generated approximately every $9.526 \times 10^{-8}$ seconds.

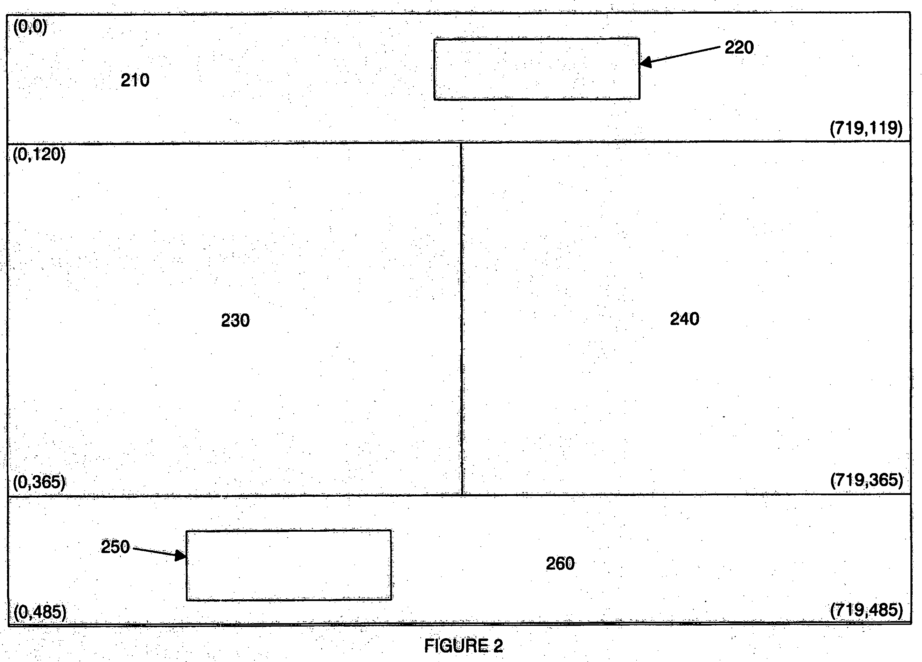

Upon transformation, the processor **125** sends transformed video data to an encoder **135.** The encoder **135** converts the digital video data into output signals compatible with an output device such as a standard CCTV display monitor **140** and/or video recorder **145.** The monitor **140** may display a graphical user interface such as that described in the discussion of **Figure 2.**

By way of example and not limitation, the encoder **135** may be any suitable commercially available decoder, such as an SAA7121H digital video encoder by Phillips Electronics, N.V. The SAA7121H digital video encoder circuit accepts CCIR compatible YUV data with 720 active pixels per line and encodes the digital YUV video data to NTSC, PAL, CVBS or S-video signals.

Output from the encoder **135** is sent to an output device, such as a standard CCTV display monitor **140** and/or video recorder **145.** The display monitor **140** a device configured to visually display images based on electronic video signals output from the encoder **135.** The recorder **145** may be any device configured to record video signals from the encoder **135** on removable or non-removable storage media such as, for example, a magnetic tape, diskette, CD-ROM, DVD, hard disk, memory (e.g., nonvolatile EEPROM) or the like. If both a display monitor **140** and recorder **145** are used, the devices may be configured in parallel or in series (e.g., without output from the video recorder being sent to a display monitor).

According to the invention, in addition to transforming wide-angle image data, the image data processor **125** produces output image data from one or more supplementary sources, such as an additional camera system **150.** The additional camera system **150** includes an analog or digital camera **160** with a normal lens **155** (i.e., not a wide-angle lens) aimed at a determined portion of the monitored area. The lens **155** may have a narrower Field of View (FOV), e.g., 45°, which would provide higher resolution than wide-angle lens **105,** thus providing a more detailed video image. Such a configuration enables displaying an undistorted image derived from transformed wide-angle lens image data as well as an image produced using the additional camera system **150.** Such a configuration may also enable switching from a relatively low resolution undistorted image derived from wide-angle lens image data to a higher resolution image, with a higher zoom factor capability, produced using the additional camera system. This gives the user the ability to isolate small details of a monitored area.

The additional camera system **150** may also include a video decoder **165** that is operably coupled to the camera and configured to translate analog signals from the camera into digital video data. The decoder **165** may also include a clock circuit (e.g., a 27 MHz video clock circuit) suitable for synchronization and processing of video image data streams. Clock signals **167** may be transmitted to processor **125.**

The additional camera system **150** further includes an image buffer **170.** The image buffer **170** may be comprised of volatile or non-volatile memory or other devices configured to temporarily store video image data, such as, for example, static random access memory (SRAM), dynamic random access memory (DRAM), fast page mode dynamic random access memory (FPM DRAM), extended data-out dynamic random access memory (EDO DRAM), synchronous dynamic random access memory (SDRAM); double data rate synchronous dynamic RAM (DDR SDRAM), Rambus dynamic random access memory (RDRAM), multiport dynamic random access memory (MPDRAM), synchronous graphics RAM (SGRAM), electronically erasable programmable read only memory (EEPROM), hard disk enabled virtual memory and/or other data storage device. The buffer **170** may be sized to store image data corresponding to an entire field or frame of video, or more or less data. Buffered video data **172** may be transmitted to processor **125.** That data may then be processed and encoded **135** for output to a display or recording device.

Moreover, the additional camera system **150** may be configured as a programmable dome camera system. Dome cameras can typically rotate (i.e., pan) 360 degrees, and tilt and zoom according to control signals. Processor **125** may produce control data **194,** based upon user command data **192** from user input module **190,** to control positioning and movement of the dome camera. A control interface (not shown) may also be operably coupled to dome camera **160** and processor **125,** as necessary to convert control data output from the processor **125** into signals for controlling dome camera **160** position, movement and zooming.

*Transformation Methodology*

Undistorted data may be produced by mathematically transforming wide-angle image data. Many transformation processes (also referred to as dewarping, mapping, remapping, planar projection, conversion and perspective correction) are known in the art and can be adapted, in accordance with the teachings herein, to produce undistorted data from wide-angle image data (including fisheye image data). While the invention is not limited to any specific transformation processes, an exemplary panoramic view transformation and an exemplary virtual view transformation are described more fully below for use with a system of the invention employing fisheye lens image data.

Referring now to **Figure 2,** a graphical user interface in accordance with an exemplary implementation of the invention is conceptually shown. Strips, which may be rectangular in shape as illustrated, correspond to transformed panoramic views. The transformed panoramic views **210** and **260** exhibit upright orientation and substantially reduced (or no) wide-angle image distortion, thus providing a readily discernible view of the monitored area. An example of a suitable transformation carried out by the processor is discussed subsequently.

Also shown in **Figure 2** are one or more virtual views **230** and **240,** each of which may be an undistorted view of a user-determined portion of the panoramic views **210** and **260.** Virtual view data may be obtained either by transformation of portions of the wide-angle video image data, or by positioning and focusing a camera having a normal lens (i.e., not a wide-angle lens) to produce image data for the determined portion of the monitored area. Again, a suitable exemplary transformation to obtain the virtual view data is discussed subsequently.

The processor may be further configured to provide reference overlay (e.g., windows - i.e., graphically generated frames or boxes, or other shapes, overlaid in the panoramic views - frames **220** and **250** as shown in **Figure 2)** corresponding to the undistorted view of the determined portions of the panoramic views represented by the virtual views **230** and **240.** Thus, the reference overlay **220** and **250** reveals what portions of the panoramic views are represented by the virtual views **230** and **240.**

As an operator pans, tilts or zooms either of the virtual views **230** and **240** to correspond to any part of either of panoramic views **210** and **260,** the corresponding reference window **220** or **250** overlaid on top of a panoramic view **210** and **260** is adjusted by moving and/or changing its size in the panoramic view **210** or **260,** to conform to the virtual view, thus indicating the part of the panoramic view **210** and **260** represented by the virtual view **230** or **240.** Panning and tilting a virtual view **230** or **240** causes the reference window **220** or **250** to move horizontally and/or vertically in a panoramic view **210** or **260.** Zooming in (i.e., increasing zoom) causes the reference window **220** or **250** to decrease in size in the panoramic view **210** or **260.** Zooming out (i.e., decreasing zoom) causes the reference window **220** or **250** to increase in size in the panoramic view **210** or **260.**

The system is preferably configured to allow a user to select which virtual view **230** or **240** to currently control. The active (i.e., currently controlled) virtual view **230** or **240** may be distinguished from the inactive virtual view by an indicia. For example, a white frame may surround the active virtual view and a black frame may surround the inactive virtual view. The corresponding reference window **220** or **250** may also be highlighted in either black or white based on its associated virtual view's active/inactive status.

The exemplary display screen may have a resolution of 720 by 486 pixels. The exemplary panoramic views, as shown in **Figure 2,** are each 720 pixels wide and 120 pixels high. The exemplary virtual views, as shown in **Figure 2,** may each be 360 pixels wide and 246 pixels high. Those skilled in the art will appreciate that the invention is not limited to the exemplary resolution or view sizes. Many other resolutions and sizes are feasible and come within the scope of the invention.

The reference overlay (e.g., reference windows **220** and **250**) in an exemplary implementation conforms to virtual view **230** and **240** positioning and zooming. Thus, for example, a user may pan, tilt and zoom virtual view **230** and **240** to represent any portions of the panoramic views **210** and **260.** The portions of the panoramic views represented by the virtual view **230** and **240** define the areas overlaid by reference windows **220** and **250.** Other manifestations of reference overlay, such as numerical coordinates or cross hairs, may be used in lieu of or in addition to reference windows **220** and **250.** In an alternative implementation, the system may be configured to automatically determine the portions of the panoramic views **210** and **260** to cover, such as by one or more determined algorithms (e.g., move reference windows as a function of time) or in response to one or more signals (e.g., a motion detector, gate sensor, or alarm signal).

Panoramic views **210** and **260** and virtual views **230** and **240** are displayed concurrently on a display monitor, thus providing a readily discernible view of the entire monitored area and an undistorted view of a portion of the monitored area. The reference overlay **220** and **250** may also be displayed with the panoramic views **210** and **260,** thus enabling a user to readily identify the portions of the panoramic views **210** and **260** that are represented by the virtual views **230** and **240.**

Those skilled in the art will appreciate that the invention is not limited to the exemplary number, size, shape or arrangement of views shown in **Figure 2** and discussed above. For example, one or more panoramic views **210** and **260,** and/or virtual views **230** and **240** and reference windows **220** and **250** may be provided within the scope of the invention. Thus, a display may show one or more undistorted images produced from wide-angle image data, without departing from the scope of the invention. Additionally, the user interface components may be arranged as shown in **Figure 2** and discussed above. Furthermore, the interface may be configured to allow a user to control the display arrangement. For example, a user may hide or move a panoramic view **210** or **260,** and/or a virtual view **230** or **240** and/or a reference window **220** or **250;** or hide all virtual views **230** and **240** reference windows **220** and **250;** or opt to display only a selected panoramic view **210** or **260** or virtual view **230** or **240.**

The exemplary panoramic view transformation process involves mathematically transforming wide-angle video image data into 2-dimensional space for producing panoramic views. The exemplary transformation entails determining, for each output window pixel coordinate, an address within the image buffer **120** for pixel data to be encoded and output to a display and/or recorder **145.** In a preferred implementation, this address calculation is timed such that the calculated address for each output pixel is ready just in time to feed the output encoder. This implementation advantageously eliminates the need for an output image buffer.

In an exemplary implementation, two panoramic views **210** and **260** may be produced. One panoramic view **210** corresponds to half of the monitored area (e.g., a 0-180 degree panoramic view strip). The other panoramic view corresponds to the other half of the monitored area (e.g., a 181-360° panoramic view strip). Thus, in this implementation, the second panoramic view is offset from the first panoramic view by half of the field of view. The points dividing one half from the other half may be pre-programmed, user configurable or user controllable. The two panoramic views combined provide a full (e.g., a 360°) view of the monitored area.

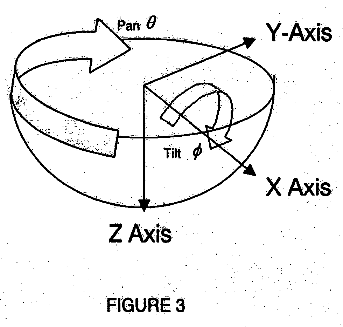

The exemplary panoramic views are 720 pixels wide and 120 pixels high. Output window pixel coordinates range from -360 to +360 for **Wx** and from -60 to +60 for **Wy.** The **Wx** and **Wy** coordinates are derived from the output view column and line pixel counters, and together with the desired Zoom factor, are transformed into θ (i.e., the pan rotation angle around the Z-axis) and φ (the tilt rotation angle around the X-axis), as conceptually illustrated in **Figure 3.** This information is then converted to an address in the input capture buffer. The data from this address is output to the encoder for display. The variables Pan, Tilt and Zoom may be programmed or commanded via user input module **190.** Given:

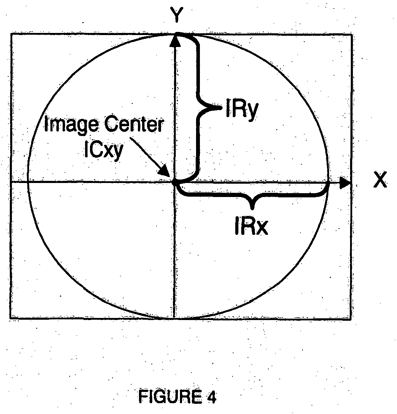

Zoom_1XT_Tilt_F V = 45°
ScaleFactorX(SFx) = 180°/720 pixels = 0.25°/pixel
Zoom Scale(ZS) = 1 (Requested zoom factor, e.g., 1, 2, 3, etc.)
ScaleFactorY(SFy) = (Zoom_1X_FOV) x (1/ZS/ 120pixels)
ScaleFactorY(SFy) = 45°/120 pixels = 0.375°/pixel
Pan = Requested Pan angle in degrees
Tilt = Requested Tilt angle in degrees
Wx = Output Window pixel x coordinate (-360 to +360)
Wy = Output Window pixel y coordinate (+60 to -60
IRx = Image buffer fisheye image X axis radius in pixels
IRy = Image buffer fisheye image Y axis radius in pixels
ICx = Image buffer fisheye image center X coordinate in pixels, as conceptually shown in **Figure 4**
ICy = Image buffer fisheye image center Y coordinate in pixels, as conceptually shown in **Figure 4.**

The horizontal component of the panoramic view (starting with output window upper left at -360, +120) is converted from pixel units to degrees (SFx). Each output pixel equates to .25 degrees (180°/720 pixels). The programmable Pan value is added to each pixel value. The second panoramic view **260** is offset from the first **210** by **+180** degrees.

Therefore:

**Equation 1** $\quad \theta = \left[(Wx + 360) \times SFx\right] + Pan = \left[(Wx + 360) \times 0.25\right] + Pan$

$$\text{Equation 2} \quad \theta = 0.25Wx + 90 + Pan$$

The vertical component of the panoramic view (starting with output window upper left at origin -360, +120) is converted from pixel units to degrees (SFy). Each vertical pixel equates to 0.375 degrees (45°/120lines). The programmable Tilt value is added to each pixel value. The programmable zoom performs a scale (45° x (1/zoom)) / 120. Therefore, Zoom Scale equals 1.

$$\text{Equation 3} \quad \phi = \left(\pi/_2 - Tilt\right) - \left[(Wy + 60) \times (SFy)\right]$$

$$\text{Equation 4} \quad \phi = 90 - Tilt - 0.375Wy - 22.5$$

$$\text{Equation 5} \quad \phi = 67.5 - (Tilt + 0.375Wy)$$

$$\text{Equation 6} \quad Radius = -\phi/_{\pi/2}$$

$$\text{Equation 7} \quad Radius = -\phi/_{90}$$

Next, the input image X, Y (Ixy) pixel is calculated, as follows:

$$\text{Equation 8} \quad Ix = \left(Radius \times \cos(\theta) \times IRx\right) + ICx$$

$$\text{Equation 9} \quad Iy = \left(Radius \times \sin(\theta) \times IRy\right) + ICy$$

The image buffer 120 is preferably addressed as a 1024 byte by 1024 byte array. The memory location, in the image buffer for the pixel data is calculated by:

$$\text{Equation 10} \quad PixelData = (Iy \times 1024) + Ix$$

Pixel Data may then be sent to the encoder **135** for output to the output device such as a display monitor **140** and or a recorder **145**. Pixel Data for each pixel comprising the panoramic views **210** and **260** may be determined in a similar manner.

Each virtual view window **230** and **240** provides a perspective corrected view (e.g., a view with no, or substantially reduced, fisheye distortion) of any portion of a panoramic view **210** or **260**. The virtual view windows are preferably 360 pixels wide and **240** pixels high. The center of the window is defined as 0,0. **Wx** values range from **-180** to **+180** and **Wy** values range from **+120** down to **-120**. The **Wx** and **Wy** coordinates are taken from the output window line and pixel counters and, together with the desired Pan, Tilt and Zoom Scale, are transformed into θ, φ, and Radius using the virtual view transformation algorithm. The processor determines which algorithm (i.e., the virtual view transformation algorithm or the panoramic view transformation algorithm) to use based on where the counters indicate it is in the output video frame. As with the panoramic views, θ is defined as the Pan angle around the Z-Axis, where the positive Y direction, as shown in **Figure 3,** is 0 degrees. Additionally, φ is the Tilt angle around the X-Axis where the positive Z direction, pointing straight down as shown in Figure 3, is 0 degrees. Z is the perpendicular distance from the X-Y plane down to the surface of a unity radius hemispheric fisheye model.

The virtual view transformation algorithm entails converting the X and Y output window coordinates to an equivalent proportion of a unity radius hemisphere model using a current Zoom factor and a measured radius-X and radius-Y from an input fisheye circular image. These adjusted values are used to calculate a corresponding Z value.

The X, Y and Z coordinates are rotated around the unity radius hemisphere model using the commanded Pan and Tilt from the user input module **190.** The rotated X and Y values are then rescaled back to pixels and lines, based on measured radius-X and radius-Y from the input fisheye circular image. The rescaled X and Y are then converted to an address in the input image buffer **120.** Data from this address is then output to the encoder **135** for display. The variables Pan, Tilt, and Zoom are the angle of interest commanded by the user input module **190.**
Given:

Pan = Commanded Pan angle in degrees
Tilt = Commanded Tilt angle in degrees
Zoom = Requested Zoom scale (e.g., 1, 2, 3, etc....)
Wx = Output Window pixel x coordinate (-180 to + 180)
Wy = Output Window pixel y coordinate (+120 to -120)
IRx = Image buffer fisheye image X axis radius in pixels
IRy = Image buffer fisheye image Y axis radius in pixels
ICx = Image buffer fisheye image center X coordinate in pixels, as conceptually shown in **Figure 4**
ICy = Image buffer fisheye image center Y coordinate in pixels, as conceptually shown in **Figure 4**

The vertical and horizontal components of the virtual view window (center at origin 0,0) are converted from pixel units to unit values from 0 to less than one by dividing the pixel number by the respective image radius. One is the maximum length from the center of the virtual output image, to the edge of the image. By scaling to the image radius much of the three-dimensional transformation math can be simplified.

$$\textbf{Equation 11} \quad Wx = WindowX \; / \; IRx$$

$$\textbf{Equation 12} \quad Wy = WindowY \; / \; IRy$$

To scale the Wx and Wy components by Zoom, the following equations are used.

$$\textbf{Equation 13} \quad Wx = Wx \times \frac{1}{Zoom}$$

$$\textbf{Equation 14} \quad Wy = Wy \times \frac{1}{Zoom}$$

The desired radius squared is calculated from the vertical and horizontal components using the Pythagorean theorem.

$$\textbf{Equation 15} \quad Wr^2 = Wx^2 + Wy^2$$

For each pixel, to convert the two dimensional radius squared and scaled components to a three dimensional value with a unit radius of 1, the following equations are used.
Given:

$$\textbf{Equation 16} \quad Ix^2 + Iy^2 + Iz^2 = 1$$

Then:

$$\textbf{Equation 17} \quad Iz = \sqrt{1 - Wr^2}$$

Assuming the acquired image center is perpendicular to the Z axis, a rotation of the desired window to a desired spot on the image can be performed using the Pan and Tilt values to simulate a movable dome.
To rotate around the X axis for tilt, the following equations are used.

$$\text{Equation 18} \quad Iz' = \left(Iz \times \cos(Tilt)\right) - \left(Wy \times \sin(Tilt)\right)$$

$$\text{Equation 19} \quad Wy' = \left(Wy \times \cos(Tilt)\right) + \left(Iz \times \sin(Tilt)\right)$$

To rotate around the Z axis for pan, the following equations are used.

$$\text{Equation 20} \quad Wx' = \left(Wx \times \cos(Pan)\right) - \left(Wy' \times \sin(Pan)\right)$$

$$\text{Equation 21} \quad Wy' = \left(Wx \times \sin(Pan)\right) + \left(Wy' \times \cos(Pan)\right)$$

To convert unit values to Image Buffer pixel units, the following equations are used.

$$\text{Equation 22} \quad Ix = Wx' \times IRx$$

$$\text{Equation 23} \quad Iy = Wy' \times IRy$$

To align the origin relative to upper left of input image buffer, the following equations are used.

$$\text{Equation 24} \quad Ix = Ix + ICx$$

$$\text{Equation 25} \quad Iy = Iy + ICy$$

The image buffer **120** may be addressed as a 1024 byte by 1024 byte array. The memory location, in the image buffer **120,** for the pixel data is calculated using the following equation.

$$\text{Equation 26} \quad PixelData = (Iy \times 1024) + Ix$$

PixelData may then be sent to the encoder **135** for output to the display window.

Advantageously, the panoramic views **210** and **260** provide context for the virtual views **230** and **240.** A user never loses sight as to what is happening in the monitored area outside a virtual view, even as the user zooms in on a specific event or object. The user does not have to keep changing video sources to view areas outside the virtual views **230** and **240.** Concomitantly, the reference windows **220** and **250** provide a visual indication of the portion of a panoramic view represented by a virtual view. Thus, a user can readily determine where in a monitored area they are looking. In an embodiment that includes an additional dome camera system, the ability to switch to the additional camera to produce a high resolution, high zoom factor, virtual view gives the user the ability to resolve small details of a scene.

Other transformation algorithms may be used for transforming wide-angle image data according to the principles of the invention. In selecting or deriving suitable algorithms, various factors may come into play, including, for example, available system resources (e.g.; processor type and speed, and memory), cost, speed and output quality. Thus, an algorithm may be better suited for one system configuration over another system configuration. Additionally, a system intended for a particular purpose, e.g., a high resolution progressive display, may benefit more from or demand a fast algorithm to generate the required undistorted pixel data in a timely manner.

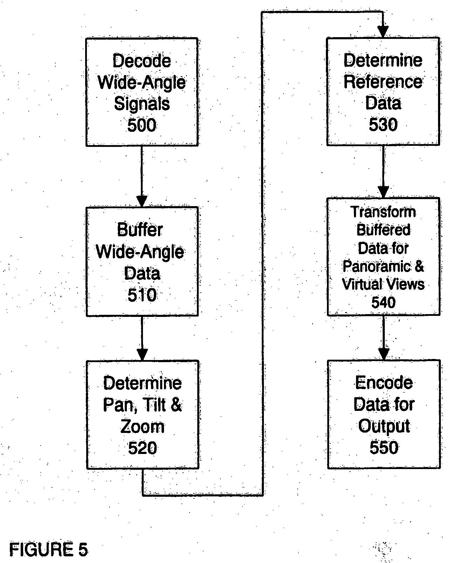

Referring now to **Figure 5,** a high level flow chart illustrating a process for producing an undistorted image not in accordance with an exemplary implementation of the invention is shown. The steps may be implemented using a system with a programmed processor as described above. **Figure 5** may equally represent a high level block diagram of an exemplary system not constructed in accordance with the invention, implementing the steps thereof.

In step **500,** wide angle image signals are decoded into digital wide-angle image data. The signals may be supplied from a video camera system or from a source of prerecorded data.

In step **510,** the decoded wide-angle data (e.g., fisheye lens image data) is buffered. Buffering entails storing the data in an input image buffer.

Next, in step **520,** pan, tilt and zoom data are obtained to specify regions of interest from the buffered wide-angle data for display. Pan, tilt and zoom data may be supplied via a user input module, such as user input module **290.** Those skilled in the art will appreciate that values other than pan, tilt and zoom (e.g., Cartesian coordinate values) may be specified to define areas of interest in the panoramic views.

Next, in step **540,** buffered wide-angle data are transformed using a transformation algorithm. The wide-angle image data is transformed, on a pixel-by-pixel basis, as the data for a pixel is required for encoding, to produce output signals in real-time. The transformation may, for example, be carried out according to a transformation process as described above.

Next, in step **550,** as data is transformed in step **540,** the transformed data is encoded for output. The encoded output may then be sent to a display monitor and/or to a recorder.

Those skilled in the art will appreciate that the order in which some of the steps are performed may vary from the order shown in the flowchart. For example, a pre-programmed pan, tilt and zoom may be determined before wide-angle data is initially buffered.

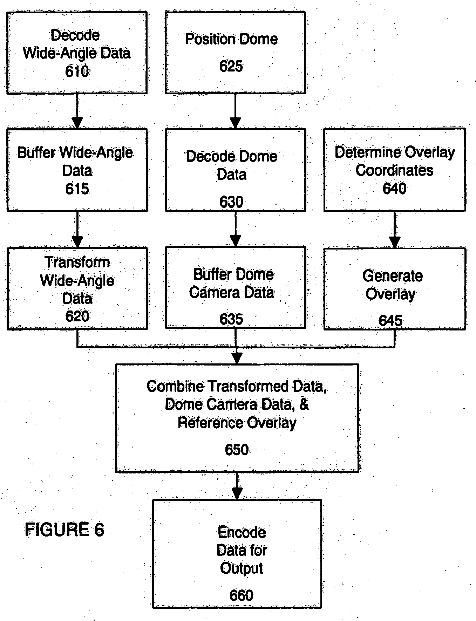

Referring now to **Figure 6,** a high level flow chart illustrating another process for producing an undistorted image not in accordance with an exemplary implementation of the invention is shown. As with the process illustrated by the flowchart of **Figure 5,** the steps may be implemented using a system with a programmed processor as described above. **Figure 6** may equally represent a high level block diagram of an exemplary system constructed in accordance with the invention, implementing the steps thereof.

In step **610,** wide-angle image signals are decoded into digital wide-angle image data. The signals may be supplied from a video camera system or from a source of prerecorded data. Next in step **615,** the decoded wide-angle image data (e.g., fisheye lens image data) is buffered.

Next, in step **620,** buffered wide-angle data are transformed, for example, using a panoramic transformation algorithm for panoramic view data, and using a virtual view transformation algorithm for virtual view data. The wide-angle image data are transformed, on a pixel-by-pixel basis, as the data for a pixel is required for encoding, to produce output signals in real-time. The transformation may, for example, be carried out according to a transformation process as described above.

In step **625** the dome camera is positioned. Dome camera positioning signals may be obtained from user input, such as user input of pan, tilt and zoom data or commands. The communicated positioning signals will cause the dome camera to aim at and zoom to the region of the monitored area corresponding to the determined pan, tilt and zoom values. Those skilled in the art will appreciate that values other than pan, tilt and zoom (e.g., Cartesian coordinate values) may be specified to define areas of interest in the panoramic views.

Next, in step **630,** dome camera signals are decoded into digital dome camera image data. The signals are supplied from a dome camera system. Then, in step **635,** the decoded dome camera image data is buffered. The buffered dome camera data may be encoded, without transformation, for output to a display monitor and/or to a recorder.

In step **640,** coordinates are determined for overlaying a reference window in a panoramic view. The overlaid reference window, which is generated in step **645,** reveals the portion of a panoramic view represented by a virtual view.

In step **650,** buffered dome camera data, buffered wide-angle data, and data corresponding to a reference window are combined. The combined transformed wide-angle data, dome camera data and pixel data corresponding to the reference window are encoded, as in step **660.** The dome camera data may defines a virtual view. The transformed data may define another virtual view and panoramic views. The pixel data corresponding to the reference window defines a reference window. The encoded output may be sent to a display monitor and/or to a recorder.

Those skilled in the art will appreciate that the order in which some of the steps are performed may not be important. For example, the reference overlay coordinates may be determined before, after or during transformation of the buffered data. Additionally, by way of example, a pre-programmed pan, tilt and zoom may be determined before the wide-angle data is initially buffered. As another example, dome position data may be sent before reference overlay is determined. As yet another example, dome data may be buffered after transformation of wide-angle data. Also, dome camera data may be obtained by the processor before completion of transformation. Additionally, various steps may be performed concurrently.

## Claims

1. A system (100) for correcting wide-angle image data, said system comprising:

   a first input buffer (120) configured to store wide-angle image data;
   an image data processor (125) operably coupled to said first input buffer (120) and configured to transform wide angle image data (122) stored in the first input buffer (120) into corrected image data; wherein

the wide-angle image data includes distortion and said image data processor (125) transforms the wide-angle image data in the first input (120) buffer into corrected image data that is substantially undistorted;

a first source of wide-angle image data operably coupled to said first input buffer (120), wherein the first source of wide-angle image data is a video camera (110) equipped with a wide-angle lens (105), whereby the wide-angle lens (105) is aimed at an area to be monitored;

an encoder (135) operably coupled to said image data processor (125) and configured to receive and encode the corrected image data in a format suitable for at least one of display and recording of corrected images; wherein said corrected image data is not stored in a buffer from the time of transformation by the image data processor (125) until the time said undistorted image data is received by the encoder (135); and

a monitor (140) operably coupled to said encoder (135) for displaying corrected images, wherein said monitor (140) is a device configured to visually display images based on electronic video signals output from the encoder (135), wherein

output from the encoder (135) is sent to said monitor (140),

said encoder is further configured to output signals for producing corrected images comprising a plurality of pixels; and

said image data processor (125) is configured to transform wide angle image data (122) stored in said first input buffer (120) into undistorted image data by determining, for each of said plurality of pixels, wide angle image data that corresponds to each of said plurality of pixels on a pixel by pixel basis, and providing said wide angle image data to said encoder (135), **characterized in that**

the system (100) further comprises

**auxiliary request I**

a second input buffer (170) configured to store image data different from the wide-angle image data stored in said first input buffer (120), said second input buffer being operably connected to said image data processor (125), and

at least one additional camera system (150) comprising a second source of normal field of view image data operably coupled to said second input buffer (170); wherein

the additional camera system (150) includes an analog or digital camera (160) with a normal lens (155) aimed at a determined portion of the monitored area;

wherein

the image data processor (125) is further configured to produce output image data from the additional camera system (150) enabling displaying an undistorted image derived from transformed wide-angle image data and an image produced using the additional camera system (150) concurrently on said monitor (140).

2. A system (100) according to claim 1, further comprising:

a look-up table memory (130) operably coupled to the image data processor (125), said look-up table memory (130) being configured to store transformation calculation data to be used by the image data processor (125) to transform wide angle image data stored in the first input buffer (120) into corrected image data.

3. A system (100) according to claim 1, further comprising:

a user input module (190) operably coupled to the image data processor (125) and configured to provide user command data to the image data processor (125).

4. A system (100) according to claim 3, wherein:

said user input module (190) is further configured to calculate a value based on user input, and to communicate said calculated value to the image data processor (125); and

said image data processor (125) is further configured to use said calculated value to transform wide angle image data stored in the first input buffer (120) into **auxiliary request I**

corrected image data.

5. A system (100) according to claim 1, wherein said image data processor (125) comprises a processing device selected from the group consisting essentially of a field programmable gate array and an application specific integrated circuit.

6. A system (100) according to claim 1, wherein the video camera (110) produces video signals in a standard format selected from the group consisting essentially of PAL, SECAM and NTSC.

**Patentansprüche**

1. System (100) zum Korrigieren von Weitwinkelbilddaten, das System aufweisend:

   einen ersten Eingangszwischenspeicher (120), der zum Speichern von Weitwinkelbilddaten konfiguriert ist;
   einen Bilddatenprozessor (125), der betriebsfähig an den ersten Eingangszwischenspeicher (120) gekoppelt und zum Umwandeln von Weitwinkelbilddaten (122), die im ersten Eingangszwischenspeicher (120) gespeichert sind, in korrigierte Bilddaten konfiguriert ist; wobei
   die Weitwinkelbilddaten Verzerrung enthalten und der Bilddatenprozessor (125) die Weitwinkelbilddaten im ersten Eingangszwischenspeicher (120) in korrigierte Bilddaten umwandelt, die im Wesentlichen unverzerrt sind;
   eine erste Quelle von Weitwinkelbilddaten, die betriebsfähig an den ersten Eingangszwischenspeicher (120) gekoppelt ist, wobei
   die erste Quelle von Weitwinkelbilddaten eine Videokamera (110) ist, die mit einer Weitwinkellinse (105) ausgerüstet ist, wobei die Weitwinkellinse (105) auf einen Bereich gerichtet ist, der überwacht werden soll;
   einen Codierer (135), der betriebsfähig an den Bilddatenprozessor (125) gekoppelt ist und zum Empfangen und Codieren der korrigierten Bilddaten in ein Format konfiguriert ist, das zu mindestens einem von Anzeigen und Aufzeichnen von korrigierten Bildern geeignet ist; wobei
   die korrigierten Bilddaten ab der Zeit der Umwandlung durch den Bilddatenprozessor (125) bis zu der Zeit, zu der die unverzerrten Bilddaten durch den Codierer (135) empfangen werden, nicht in einem Zwischenspeicher gespeichert werden; und
   einen Monitor (140), der zum Anzeigen von korrigierten Bildern betriebsfähig an den Codierer (135) gekoppelt ist, wobei der Monitor (140) ein Gerät ist, das zum visuellen Anzeigen von Bildern auf Grundlage von elektronischen Videosignalen, welche vom Codierer (135) ausgegeben werden, konfiguriert ist, wobei die Ausgabe vom Codierer (135) an den Monitor (140) gesendet wird,
   wobei der Codierer ferner zum Ausgeben von Signalen zum Erzeugen von korrigierten Bildern, die mehrere Pixel aufweisen, konfiguriert ist; und
   wobei der Bilddatenprozessor (125) zum Umwandeln von Weitwinkelbilddaten (122), die im ersten Eingangszwischenspeicher (120) gespeichert sind, in unverzerrte Bilddaten durch Bestimmen, für jedes der mehreren Pixel, von Weitwinkelbilddaten, die jedem der mehreren Pixel auf einer Pixel-für-Pixel-Basis entsprechen, und Zuführen der Weitwinkelbilddaten zum Codierer (135) konfiguriert ist, **dadurch gekennzeichnet, dass** das System (100) ferner Folgendes umfasst:

   einen zweiten Eingangszwischenspeicher (170), der zum Speichern von Bilddaten konfiguriert ist, die sich von den Weitwinkelbilddaten unterscheiden, welche im ersten Eingangszwischenspeicher (120) gespeichert sind, wobei der zweite Eingangszwischenspeicher betriebsfähig mit dem Bilddatenprozessor (125) verbunden ist, und
   mindestens ein zusätzliches Kamerasystem (150), das eine zweite Quelle von Normalsehfeldbilddaten umfasst und betriebsfähig an den zweiten Eingangszwischenspeicher (170) gekoppelt ist; wobei
   das zusätzliche Kamerasystem (150) eine Analog- oder Digitalkamera (160) mit einer normalen Linse (155) enthält, die auf einen bestimmten Abschnitt des überwachten Bereichs gerichtet ist; wobei
   der Bilddatenprozessor (125) ferner zum Erzeugen von Ausgabebilddaten vom zusätzlichen Kamerasystem (150) konfiguriert ist, wodurch das gleichzeitige Anzeigen eines unverzerrten Bilds, das aus umgewandelten Weitwinkelbilddaten abgeleitet ist, und eines Bilds, das unter Verwendung des zusätzlichen Kamerasystems (150) erzeugt ist, auf dem Monitor (140) ermöglicht ist.

2. System (100) nach Anspruch 1, ferner aufweisend:

   einen Verweistabellenspeicher (130), der betriebsfähig an den Bilddatenprozessor (125) gekoppelt ist, wobei der Verweistabellenspeicher (130) dazu konfiguriert ist, Umwandlungsberechnungsdaten zu speichern, die durch den Bilddatenprozessor (125) zum Umwandeln von Weitwinkelbilddaten, die im ersten Eingangszwischenspeicher (120) gespeichert sind, in korrigierte Bilddaten verwendet werden sollen.

3. System (100) nach Anspruch 1, ferner aufweisend:

ein Benutzereingabemodul (190), das betriebsfähig an den Bilddatenprozessor (125) gekoppelt ist und zum Zuführen von Benutzerbefehlsdaten zum Bilddatenprozessor (125) konfiguriert ist.

4. System (100) nach Anspruch 3, wobei:

das Benutzereingabemodul (190) ferner zum Berechnen eines Werts auf Grundlage der Benutzereingabe und zum Übermitteln des berechneten Werts an den Bilddatenprozessor (125) konfiguriert ist; und der Bilddatenprozessor (125) ferner zum Verwenden des berechneten Werts zum Umwandeln von Weitwinkelbilddaten, die im ersten Eingangszwischenspeicher (120) gespeichert sind, in korrigierte Bilddaten konfiguriert ist.

5. System (100) nach Anspruch 1, wobei der Bilddatenprozessor (125) ein Verarbeitungsgerät aufweist, das aus der Gruppe ausgewählt ist, die im Wesentlichen aus einem feldprogrammierbaren Gate-Array und einer anwendungsspezifischen integrierten Schaltung besteht.

6. System (100) nach Anspruch 1, wobei die Videokamera (110) Videosignale in einem Standardformat erzeugt, das aus der Gruppe ausgewählt ist, die im Wesentlichen aus PAL, SECAM und NTSC besteht.

## Revendications

1. Système (100) destiné à corriger des données d'image grand-angle, ledit système comprenant :

un premier tampon d'entrée (120) configuré pour stocker des données d'image grand-angle ;
un processeur de données d'image (125) fonctionnellement couplé audit premier tampon d'entrée (120) et configuré pour transformer des données d'image grand-angle (122) stockées dans le premier tampon d'entrée (120) en données d'image corrigées ; dans lequel
les données d'image grand-angle présentent une distorsion et ledit processeur de données d'image (125) transforme les données d'image grand-angle dans le premier tampon d'entrée (120) en données d'image corrigées qui sont sensiblement sans distorsion ;
une première source de données d'image grand-angle fonctionnellement couplée audit premier tampon d'entrée (120),
la première source de données d'image grand-angle étant une caméra vidéo (110) équipée d'un objectif grand-angle (105), l'objectif grand-angle (105) étant pointé vers une zone à surveiller ;
un encodeur (135) fonctionnellement couplé audit processeur de données d'image (125) et configuré pour recevoir et coder les données d'image corrigées dans un format approprié pour l'affichage et/ou l'enregistrement d'images corrigées ; dans lequel
lesdites données d'image corrigées ne sont pas stockées dans un tampon depuis le moment de la transformation par le processeur de données d'image (125) jusqu'au moment où lesdites données d'image sans distorsion sont reçues par l'encodeur (135) ; et
un moniteur (140) fonctionnellement couplé audit encodeur (135) pour afficher des images corrigées, ledit moniteur (140) étant un dispositif configuré pour afficher visuellement des images sur la base d'une sortie de signaux vidéo électroniques de l'encodeur (135), la sortie de l'encodeur (135) étant envoyée audit moniteur (140), ledit encodeur étant également configuré pour délivrer des signaux destinés à produire des images corrigées comprenant une pluralité de pixels ; et
ledit processeur de données d'image (125) étant configurée pour transformer des données d'image grand-angle (122) stockées dans ledit premier tampon d'entrée (120) en données d'image sans distorsion en déterminant, pour chaque pixel de ladite pluralité de pixels, les données d'image grand-angle qui correspondent à chaque pixel de ladite pluralité de pixels pixel par pixel, et en fournissant lesdites données d'image grand-angle audit encodeur (135), **caractérisé en ce que**
le système (100) comprend en outre
un deuxième tampon d'entrée (170) configuré pour stocker des données d'image différentes des données d'image grand-angle stockées dans ledit premier tampon d'entrée (120), ledit deuxième tampon d'entrée étant fonctionnellement connecté audit processeur de données d'image (125), et
au moins un système de caméra supplémentaire (150) comprenant une deuxième source de données d'image en champ de vision normal fonctionnellement couplée audit deuxième tampon d'entrée (170),
le système de caméra supplémentaire (150) comportant une caméra analogique ou numérique (160) avec un objectif normal (155) pointé vers une partie déterminée de la zone surveillée ; dans lequel

le processeur de données d'image (125) est également configuré pour produire des données d'image de sortie à partir du système de caméra supplémentaire (150) permettant l'affichage d'une image sans distorsion dérivée de données d'image grand-angle transformées et d'une image produite au moyen du système de caméra supplémentaire (150) simultanément sur ledit moniteur (140).

**2.** Système (100) selon la revendication 1, comprenant en outre :

une mémoire en table de conversion (130) fonctionnellement couplée au processeur de données d'image (125), ladite mémoire en table de conversion (130) étant configurée pour stocker des données de calcul de transformation devant être utilisées par le processeur de données d'image (125) pour transformer des données d'image grand-angle stockées dans le premier tampon d'entrée (120) en données d'image corrigées.

**3.** Système (100) selon la revendication 1, comprenant en outre :

un module de saisie utilisateur (190) fonctionnellement couplé au processeur de données d'image (125) et configuré pour fournir des données de commande d'utilisateur au processeur de données d'image (125).

**4.** Système (100) selon la revendication 3, dans lequel :

ledit module de saisie utilisateur (190) est également configuré pour calculer une valeur sur la base d'une saisie utilisateur, et pour communiquer ladite valeur calculée au processeur de données d'image (125) ; et ledit processeur de données d'image (125) est également configuré pour utiliser ladite valeur calculée pour transformer des données d'image grand-angle stockées dans le premier tampon d'entrée (120) en données d'image corrigées.

**5.** Système (100) selon la revendication 1, dans lequel ledit processeur de données d'image (125) comprend un dispositif de traitement choisi dans le groupe essentiellement constitué par un réseau prédiffusé programmable par l'utilisateur et un circuit intégré spécifique.

**6.** Système (100) selon la revendication 1, dans lequel la caméra vidéo (110) produit des signaux vidéo dans un format classique choisi dans le groupe essentiellement constitué par PAL, SECAM et NTSC.

FIGURE 1

FIGURE 2

(0,0)

210

220

(719,119)

(0,120)

230

240

(0,365)

(719,365)

250

260

(0,485)

(719,485)

EP 1 515 548 B1

17

FIGURE 3

FIGURE 4

FIGURE 5

EP 1 515 548 B1

```
┌─────────────────┐   ┌─────────────────┐
│     Decode      │   │  Position Dome  │
│ Wide-Angle Data │   │                 │
│      610        │   │      625        │
└────────┬────────┘   └────────┬────────┘
         │                     │
         ▼                     ▼
┌─────────────────┐   ┌─────────────────┐   ┌─────────────────┐
│ Buffer Wide-Angle│  │  Decode Dome    │   │Determine Overlay│
│      Data        │  │     Data        │   │   Coordinates   │
│      615         │  │                 │   │      640        │
│                  │  │      630        │   │                 │
└────────┬─────────┘  └────────┬────────┘   └────────┬────────┘
         │                     │                     │
         ▼                     ▼                     ▼
┌─────────────────┐   ┌─────────────────┐   ┌─────────────────┐
│    Transform    │   │   Buffer Dome   │   │    Generate     │
│   Wide-Angle    │   │  Camera Data    │   │    Overlay      │
│     Data        │   │                 │   │                 │
│      620        │   │      635        │   │      645        │
└────────┬────────┘   └────────┬────────┘   └────────┬────────┘
         │                     │                     │
         └─────────────────────┼─────────────────────┘
                               │
                               ▼
         ┌───────────────────────────────────────┐
         │      Combine Transformed Data,         │
         │       Dome Camera Data, &              │
         │        Reference Overlay               │
         │                                        │
         │                650                     │
         └────────────────────┬───────────────────┘
                              │
                              ▼
                    ┌─────────────────┐
                    │     Encode      │
                    │    Data for     │
                    │     Output      │
                    │                 │
                    │      660        │
                    └─────────────────┘
```

FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5903319 A
- EP 1028389 A2
- US 20020102101 A1